# DEMANDE DE BREVET EUROPEEN

(11) **EP 0 925 751 A1**
(43) Date de publication de la demande: **30.06.1999**
(21) Numéro de dépôt: 98403299.5
(22) Date de dépôt: 24.12.1998
(51) Int. Cl.: A47J 37/04

(54) **Accessoire de tournebroche pour la cuisson des aliments**

(30) Priorité: 24.12.1997 FR 9716460
(71) Demandeur: Eliasse, Francis, 95160 Montmorency (FR)
(72) Inventeur: Eliasse, Francis, 95160 Montmorency (FR)
(74) Mandataire: Chambon, Gérard

(57) **Abrégé**

L'invention concerne un accessoire de tournebroche pour la cuisson d'aliments comportant un conteneur formé d'une enveloppe (1) cylindrique à base polygonale, au moins en partie ajourée et refermée sur elle-même, et de deux flasques latéraux (2a,2b) aménagés pour être traversés par la broche du tournebroche sur laquelle au moins l'un (2a) desdits flasques peut être solidarisé en rotation, accessoire qui est notamment remarquable en ce que ladite enveloppe (1) se présente sous la forme de deux parties rigides (1a,1b) dont au moins l'une comporte au moins deux faces et qui sont munies de moyens d'accrochage conjugués destinés à assurer un assemblage et un démontage à volonté.

Avantageusement, chaque partie (1a,1b) est constituée par une tôle ajourée dont au moins l'une est pliée pour former au moins deux faces formant un dièdre.

## Description

L'invention concerne un accessoire de tournebroche pour la cuisson des aliments, notamment pour fours, rôtissoires, barbecues ou similaires.

Les tournebroches sont d'un usage particulièrement courant dans les fours ou rôtissoires comme dans les barbecues.

Les tournebroches sont destinés à rôtir des pièces de viande, ou de poisson, ou encore des brochettes.

L'un des inconvénients connus surtout pour les barbecues, est l'inflammation des aliments causée par les écoulements ou projections de grasse sur les braises.

C'est pourquoi l'inventeur a cherché un dispositif qui évite ou au moins diminue de manière conséquente les risques d'inflammation.

En outre, l'inventeur a cherché aussi un dispositif qui permette avec un tournebroche classique, de faire cuire des aliments en vrac ou en morceaux.

Il est notamment connu par le CH-603 130 A, ou encore le FR-2 703 234 A, de réaliser un accessoire de tournebroche pour la cuisson d'aliments comportant un conteneur formé d'une part, d'une enveloppe au moins en partie ajourée et refermée sur elle-même et d'autre part, de deux flasques latéraux aménagés pour être traversés par la broche du tournebroche sur laquelle au moins l'un desdits flasques peut être solidarisé en rotation.

Toutefois, ces dispositifs connus se présentent généralement sous forme cylindrique à base circulaire, voire à base polygonale, mais alors dans ce dernier cas avec des charnières ou plusieurs panneaux accrochés les uns aux autres. En outre, de tels conteneurs présentent généralement une ou des parois grillagées.

Il est clair que ces dispositif connus, d'un maniement peu aisé, sont particulièrement encombrants, très difficiles à nettoyer et à traiter anti-adhérents.

L'inventeur à cherché et mis au point un dispositif notamment facile à fabriquer, à monter et démonter, à ranger et à nettoyer.

Pour atteindre ces objectifs, l'inventeur a conçu un accessoire de tournebroche du type précité, avec un conteneur cylindrique à base polygone, mais qui est notamment remarquable en ce que ladite enveloppe se présente sous la forme de deux parties rigides dont au moins l'une comporte au moins deux faces et qui sont munies de moyens d'accrochage conjugués destinés à assurer un assemblage et un démontage à volonté.

Avantageusement, chaque partie est constituée par une tôle ajourée dont au moins l'une est pliée pour former au moins deux faces formant un dièdre, tandis que de préférence, la base polygonale du conteneur comporte 2 n côtés, de même que chaque flasque latéral, et chaque partie constitue une demi-coquille à n faces. Par exemple, la base du conteneur est hexagonale.

Selon un mode de réalisation avantageux, afin de limiter et mieux répartir les éventuels écoulements vers l'extérieur, les ajours de la partie de l'enveloppe ajourée présentent chacun une forme oblongue et sont disposés en quinconce les uns par rapport aux autres.

Par exemple, les moyens d'accrochage des deux parties entre elles sont constitués par des pattes et respectivement des fentes.

Au moins l'un des flasques latéraux est monté de manière amovible sur un flan de l'enveloppe, celle-ci et le ou lesdits flasques étant pourvus de moyens conjugués d'accrochage, tandis que les moyens d'accrochage du ou des flasques sur l'enveloppe sont constitués par des pattes et respectivement des fentes et selon un mode de réalisation, au moins une desdites pattes d'accrochage pour au moins le flasque à solidariser en rotation sur la broche, présentent une découpe en L ou en T.

En outre, au moins l'un des flasques est également ajouré.

Selon un mode de réalisation tout à fait spécifique et avantageux, la broche est solidarisée en rotation sur au moins l'un des flasques au moyen d'un moyen d'entraînement qui se fixe sur ladite broche et qui présente une forme d'étrier à deux ailes dont au moins l'une est profilée en T et qui sont destinées à venir en prise avec ledit flasque dans des lumières ménagées dans celui-ci de façon à pouvoir assurer un verrouillage en translation et en rotation quel que soit le sens.

L'invention sera bien comprise et d'autres particularités apparaîtront à la lecture de la description qui va suivre et qui se réfère aux dessins annexés dans lesquels:
- la figure 1 montre en perspective et en éclaté, un mode de réalisation selon l'invention,
- la figure 2 représente le mode de réalisation de la figure 1, toutes les pièces étant assemblées les unes aux autres.

Sur les figures, on peut voir un conteneur de forme générale cylindrique dont la base est ici un hexagone régulier.

Le conteneur représenté est constitué par une enveloppe extérieure 1 et deux flasques latéraux 2a et 2b, par exemple en métal nickelé, lesdits flasques ayant donc ici des formes hexagonales.

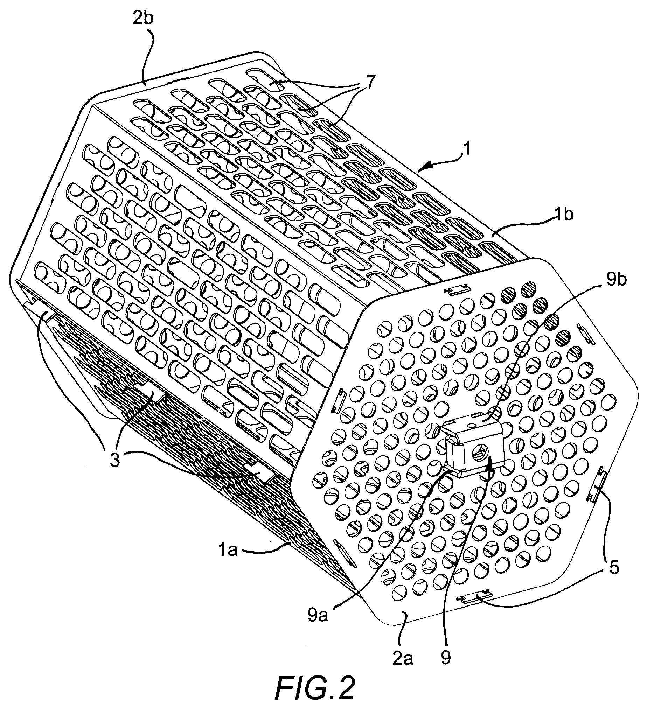

L'enveloppe 1 est constituée ici de deux demi-coquilles 1a, 1b à trois faces chacune, que l'on peut voir plus spécifiquement sur la figure 2.

Les deux demi-coquilles 1a et 1b se fixent aisément entre elles, par exemple par des pattes telles que 3 sur la demi-coquille 1b et des fentes conjuguées 4 sur l'autre demi-coquille 1a.

Les flasques 2a et 2b se fixent ici de façon analogue au moyen de pattes 5 prévues sur les bords latéraux de chaque demi-coquille 1a, 1b et de fentes 6 ménagées sur les flasques comme le montrent bien les dessins.

Dans le mode de réalisation représenté, les pattes 3 d'assemblage des deux demi-coquilles 1a, 1b présentent une découpe en L, assurant un montage aisé par un dernier mouvement translatif axial tandis que les pattes 5 pour l'assemblage des flasques présentent ici une découpe en T.

Toutefois, il est clair que les pattes 3 et 5 pourraient être de simples pattes rectangulaires, notamment pour des raisons de simplification, avec ou sans double pliage pour un accrochage, la retenue et la mise en place pouvant s'effectuer au moins en partie à l'aide de l'élasticité même de chaque demi-coquille.

De même, les pattes 3 pourraient avoir une découpe en T, et/ou les pattes 5 une découpe en L. La forme des pattes 5 en L ou en T s'avère intéressante pour un verrouillage en rotation puisque c'est par l'intermédiaire d'au moins un flasque que l'ensemble est entraîné en rotation.

On peut également constater que les faces des demi-coquilles 1a, 1b ainsi que les flasques 2a, 2b présentent tous des ajours.

Les ajours 7 des demi-coquilles 1a, 1b sont ici oblongs et en quinconce comme le montrent bien les dessins, tandis que les ajours 8 des flasques 2a, 2b sont dans l'exemple représenté de forme circulaire.

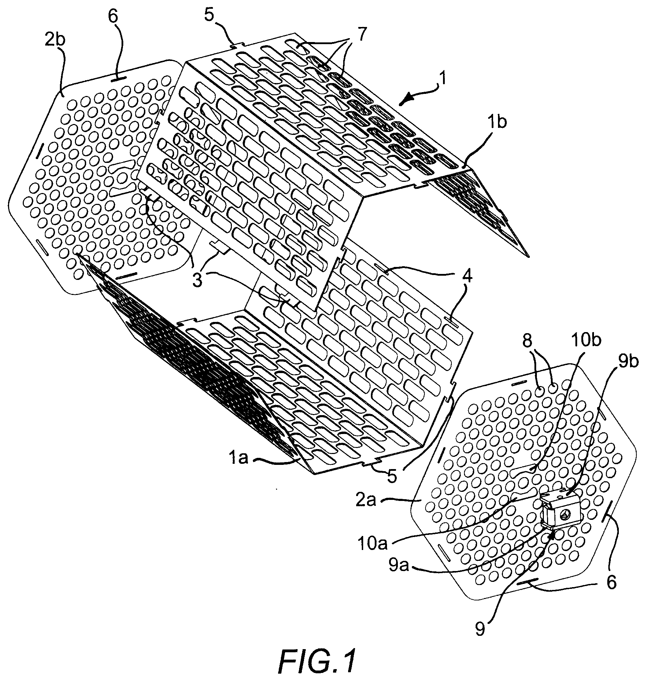

Comme le montre plus particulièrement la figure 1, on peut apprécier la simplicité de fabrication (nombre de pièces limité et de formes simples) et la facilité d'utilisation du dispositif selon l'invention.

Chaque demi-coquille 1a, 1b provient d'une simple tôle pliée pour présenter plusieurs faces (ici trois faces pour chaque demi-coquille, deux faces contiguës formant alors un angle de 120° entre elles). Chaque tôle est en outre ajourée, comme le montrent bien les dessins. Les flasques 2a, 2b sont également ici de simples tôles ajourées.

Une telle conception permet notamment, comme déjà dit ou suggéré, un traitement aisé des surfaces si on le souhaite, un nettoyage facile avec possibilité de mise en place dans les lave-vaisselle classiques et un rangement par empilement des deux parties l'une dans l'autre, etc.

La broche (non représentée) passe au travers des flasques latéraux 2a, 2b, par exemple par un ajour central, tandis qu'elle est solidarisée en rotation à l'aide ici d'un moyen original d'entraînement 9 prévu pour coopérer avec l'un des flasques (ici 2a) et sur lequel , par exemple, peut être insérée radialement une vis pour le blocage de la broche.

Le moyen d'entraînement 9, comme on peut le voir sur les dessins, présente la forme d'un étrier à deux ailes 9a, 9b. Chaque aile 9a, 9b est en outre profilée en T comme on peut le voir sur l'aile 9b de la figure 1.

Chaque aile du moyen d'entraînement 9 est destinée à venir en prise dans une lumière correspondante 10a, 10b ménagée dans le flasque concerné 2a (figure 1).

Ainsi, on comprend qu'un tel moyen d'entraînement permet d'assurer un verrouillage en translation et en rotation dans n'importe lequel des deux sens, sans nécessiter en outre d'outil pour le montage ou l'extraction.

De plus, un tel, moyen d'entraînement supprime la nécessité d'un blocage de la broche sur l'autre flasque.

On comprend qu'une rotation du conteneur selon l'invention, après remplissage et installation de celui-ci, provoquera une rotation des aliments qu'il contient et qui auront sans cesse tendance à retomber sur la face la plus basse. Il a été constaté que non seulement la cuisson était plus uniforme, mais que l'on évite aussi, comme déjà dit, au moins dans une grande proportion, l'inflammation des aliments.

De nombreuses variantes ont bien sûr été imaginées sans sortir du cadre de l'invention.

Il est clair que la forme générale du conteneur peut bien sûr être autrement que celle représentée (à base pentagonale, octogonale ou autre, mais de préférence avec un nombre paire de côtés pour une quasi-symétrie des deux parties à assembler).

En outre, les moyens d'accrochage peuvent être autrement (crochets, etc.), de même que les moyens de solidarisation en rotation de la broche.

Enfin, des accessoires supplémentaires ont aussi été imaginés, tels que des déflecteurs à l'intérieur pour brasser les aliments, des petits paniers intérieurs formant diffuseurs pour ingrédients, etc.

## Revendications

1. Accessoire de tournebroche pour la cuisson d'aliments comportant un conteneur formé d'une part, d'une enveloppe (1) cylindrique à base polygonale, au moins en partie ajourée et refermée sur elle-même et d'autre part, de deux flasques latéraux (2a,2b) aménagés pour être traversés par la broche du tournebroche sur laquelle au moins l'un (2a) desdits flasques peut être solidarisé en rotation, *caractérisé* en ce que ladite enveloppe (1) se présente sous la forme de deux parties rigides (1a, 1b) dont au moins l'une comporte au moins deux faces et qui sont munies de moyens d'accrochage conjugués destinés à assurer un assemblage et un démontage à volonté.

2. Accessoire de tournebroche selon la revendication 1, *caractérisé* en ce que chaque partie (1a,1b) est constituée par une tôle ajourée dont au moins l'une est pliée pour former au moins deux faces formant un dièdre.

3. Accessoire de tournebroche selon l'une des revendications 1 et 2, *caractérisé* en ce que la base polygonale du conteneur comporte 2 n côtés, de même que chaque flasque latéral (2a,2b), et en ce que chaque partie (1a,1b) constitue une demicoquille à n faces.

4. Accessoire de tournebroche selon la revendication 3, *caractérisé* en ce que la base du conteneur est hexagonale.

5. Accessoire de tournebroche selon l'une des revendications 1 à 4, *caractérisé* en ce que les ajours (7) de la partie de l'enveloppe (1) ajourée présentent chacun une forme oblongue et sont disposés en quinconce les uns par rapport aux autres.

6. Accessoire de tournebroche selon l'une des revendications 1 à 5, *caractérisé* en ce que les moyens d'accrochage des deux parties (1a,1b) entre elles sont constitués par des pattes (3) et respectivement des fentes (4).

7. Accessoire de tournebroche selon l'une des revendications 1 à 6, *caractérisé* en ce qu'au moins l'un des flasques latéraux (2a,2b) est monté de manière amovible sur un flan de l'enveloppe (1), celle-ci et le ou lesdits flasques étant pourvus de moyens conjugués d'accrochage.

8. Accessoire de tournebroche selon la revendication 7, *caractérisé* en ce que les moyens d'accrochage du ou des flasques (2a,2b) sur l'enveloppe (1) sont constitués par des pattes (5) et respectivement des fentes (6).

9. Accessoire de tournebroche selon la revendication 8, *caractérisé* en ce qu'au moins une patte (5) d'accrochage pour au moins le flasque à solidariser en rotation sur la broche, présente une découpe en L ou en T.

10. Accessoire de tournebroche selon l'une des revendications 1 à 9, *caractérisé* en ce qu'au moins l'un des flasques (2a,2b) est également ajouré.

11. Accessoire de tournebroche selon l'une des revendications 1 à 10, *caracterisé* en ce que la broche est solidarisée en rotation sur au moins l'un (2a) des flasques au moyen d'un moyen d'entraînement (9) qui se fixe sur ladite broche et qui présente une forme d'étrier à deux ailes (9a,9b) dont au moins l'une est profilée en T et qui sont destinées à venir en prise avec ledit flasque dans des lumières ménagées dans celui-ci de façon à pouvoir assurer un verrouillage (10a,10b) en translation et en rotation quel que soit le sens.
